# FASCICULE DE BREVET EUROPEEN

(11) **EP 3 681 280 B1**
(45) Date de publication et mention de la délivrance du brevet: **05.01.2022**
(21) Numéro de dépôt: 18765479.3
(22) Date de dépôt: 13.09.2018
(51) Int. Cl.: H05B 47/115, A01M 29/10

(54) **PROCÉDÉ DE COMMANDE DE L'INTENSITÉ LUMINEUSE D'UNE INSTALLATION, ET SYSTÈME ASSOCIÉ**
VERFAHREN ZUR STEUERUNG DER LICHTINTENSITÄT EINER ANLAGE UND ZUGEHÖRIGES SYSTEM
METHOD FOR CONTROLLING THE LIGHT INTENSITY OF A FACILITY, AND ASSOCIATED SYSTEM

(30) Priorité: 15.09.2017 FR 1758572
(43) Date de publication de la demande: 22.07.2020
(73) Titulaire: Technip France, 92400 Courbevoie (FR)
(72) Inventeur: MOLLET, Céline, 78160 Marly-Le-Roi (FR); DRESCHEL, Claude, 78600 Maisons Laffitte (FR)
(74) Mandataire: Lavoix
(86) Numéro de dépôt international: PCT/EP2018/074797
(87) Numéro de publication internationale: WO 2019/053154

(56) Documents cités:
- US-A1- 2010 102 759

## Description

La présente invention concerne un procédé de commande de l'intensité lumineuse d'une installation selon le préambule de la revendication 1.

US2010/102759 A1 décrit un procédé du type précité.

L'installation est en particulier une installation disposée dans une étendue d'eau, telle qu'une plate-forme ou une barge, ou une installation à terre. L'installation est destinée en particulier à la prospection, à la production, et/ou à la récupération de fluide, notamment d'hydrocarbures.

Le procédé selon l'invention est destiné notamment à limiter l'impact de l'installation sur la faune située autour de l'installation, en particulier sur les volatiles tels que les oiseaux migrateurs passant au voisinage de l'installation.

Les populations d'oiseaux migrateurs volant dans l'atmosphère terrestre sont sous pression. Leur environnement est modifié par de multiples facteurs, incluant l'utilisation accrue des terres, le changement climatique, etc.

Plusieurs espèces sont classées par l'UICN (International Union for Conservation of Nature) comme « vulnérables » (VUL), « en danger » (EN) ou « en danger critique d'extinction » (CR).

Afin de protéger les oiseaux migrateurs et d'améliorer la résilience des écosystèmes, plusieurs traités ont été signés à travers le monde. Les pays de l'Union Européenne ont notamment mis en place les directives Bird, afin d'assurer une meilleure protection des oiseaux migrateurs.

Plusieurs activités humaines ont été identifiées comme dangereuses, voire mortelles pour les oiseaux migrateurs. Ceci est le cas en particulier de l'éclairage des installations offshore, ou de la lumière urbaine produite à forte intensité, comme par exemple celle produite dans les stades de sport.

Dans le cas des installations d'exploitation d'hydrocarbures, des flux d'oiseaux migrateurs sont occasionnellement attirés par les torches des installations qui présentent une intensité lumineuse très importante. De manière plus surprenante, des flux d'oiseaux sont également perturbés par ces installations lorsque celle ne sont pas équipées de torche ou lorsqu'elles n'utilisent pas leur torche.

Le plus souvent, les oiseaux migrateurs s'accumulent autour des installations éclairées à ciel ouvert la nuit. Ceci induit pour eux un retard dans leur migration, un gaspillage d'énergie et par conséquent, un épuisement augmenté, et une vulnérabilité accrue aux prédateurs.

Pour pallier ce problème, des mesures d'atténuation de l'intensité lumineuse ont été proposées dans l'EIA (Energy Information Offshore) pour les installations en mer.

Une première mesure consiste à utiliser des lumières vertes ou/et bleues au lieu de lumière jaunes ou/et oranges. Néanmoins, il n'est pas établi de manière universelle que les oiseaux ne voient pas le vert ou le bleu. Ces mesures ont été mises en œuvre avec succès en mer du Nord, mais dans l'hémisphère sud, certaines populations d'oiseaux semblent au contraire plus attirées par la lumière verte.

Une autre mesure consiste à prévoir sur l'installation une volière utilisée pendant la nuit comme refuge pour les oiseaux.

Une telle mesure ne donne pas entière satisfaction. Attraper des oiseaux même épuisés pour les mettre en sécurité dans une volière peut s'avérer dangereux pour les opérateurs sur l'installation en mer. En outre, les oiseaux migrateurs volent généralement en horde et ne peuvent être isolés sans risquer de perdre leur route migratoire.

Un but de l'invention est donc de fournir un procédé permettant de limiter de manière efficace et universelle l'impact d'une installation, éclairée de nuit, sur les flux de volatiles susceptibles de circuler autour de l'installation.

À cet effet, l'invention a pour objet un procédé selon la revendication 1.

Le procédé selon l'invention peut comprendre l'une ou plusieurs des caractéristiques des revendications 2 à 8 ou la caractéristique suivante, prise(s) isolément ou suivant toute combinaison techniquement possible :
- le procédé est mis en œuvre par un système de commande de l'intensité lumineuse d'une installation.

L'invention a également pour objet un système de commande de l'intensité lumineuse d'une installation selon la revendication 9.

Le système selon l'invention peut comprendre l'une ou plusieurs des caractéristiques des revendications 10 à 15, prise(s) isolément ou suivant toute combinaison techniquement possible.

Un système selon l'invention peut être mis en œuvre au sein d'une installation de prospection, d'exploitation, et/ou de récupération de fluide comportant :
- une structure ;
- au moins une unité de prospection, de production et/ou de récupération de fluide ;
- un ensemble d'éclairage de l'installation ;
- le système de commande de l'intensité lumineuse engendrée par l'installation, tel que défini plus haut, le système de commande étant propre à piloter l'ensemble d'éclairage.

L'installation comprenant le système selon l'invention est avantageusement une installation située dans une étendue d'eau, notamment une installation flottante.

L'invention sera mieux comprise à la lecture de la description qui va suivre, donnée uniquement à titre d'exemple, et faite en se référant aux dessins annexés, sur lesquels :
- la figure 1 est une vue schématique de dessus, illustrant une première installation munie d'un système de commande selon l'invention, dans un environnement incluant des flux de volatiles ;
- la figure 2 est un schéma synoptique représentant le système de commande de l'installation de la figure 1 ;
- la figure 3 est une vue analogue à la figure 2 pour une deuxième installation selon l'invention ;
- la figure 4 est une vue analogue à la figure 2, pour une troisième installation selon l'invention.

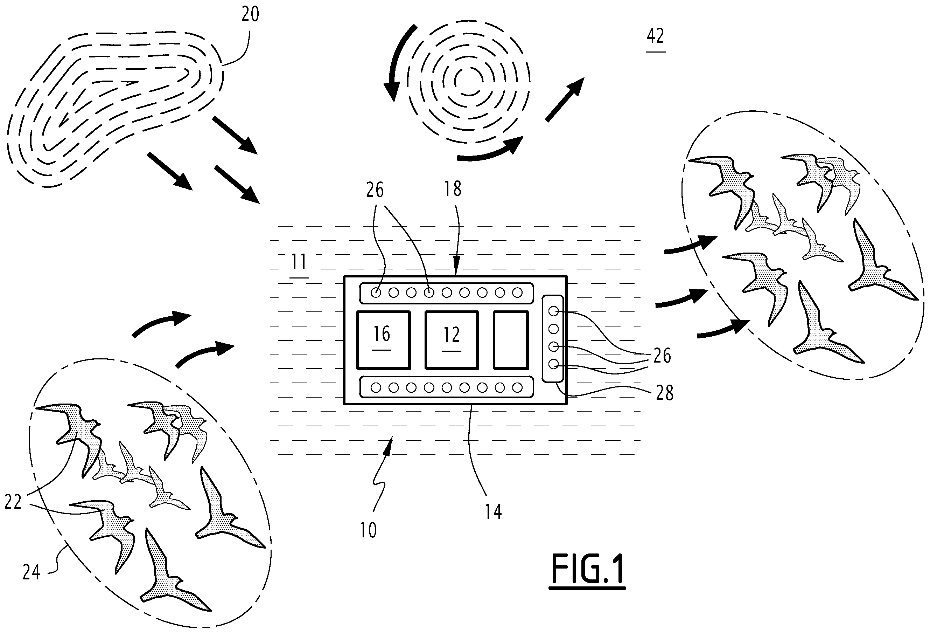

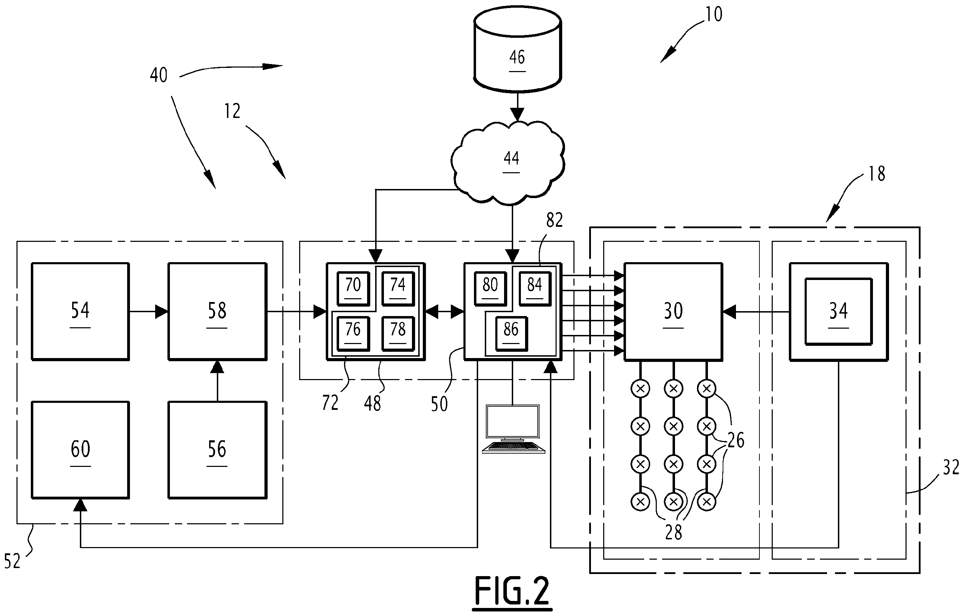

Les figures 1 et 2 illustrent schématiquement une première installation 10 munie d'un système 12 de commande d'intensité lumineuse selon l'invention.

L'installation 10 est par exemple une installation située dans une étendue d'eau 11, tel qu'un océan, une mer, un lac ou une rivière.

L'installation 10 est par exemple flottante. Elle est avantageusement formée par un support naval de surface pouvant être par exemple une unité flottante de production, de stockage et de déchargement appelée FPSO (« Floating Production, Storage and Offloading » en langue anglaise), une unité flottante dédiée au gaz naturel liquéfié appelée FLNG (« Floating Liquified Natural Gas » en langue anglaise), une plate-forme semi-submersible, pouvant être par exemple un TLP (« Tension Leg Platform » en langue anglaise), une bouée de déchargement, une colonne verticale flottante ou un navire. En variante, l'installation 10 est une structure rigide fixe de type « jacket » ou une structure oscillante assujettie au fond de la mer.

En variante, comme on le décrira plus bas, l'installation 10 est une installation située à terre.

En référence à la figure 1, l'installation 10 comporte une structure 14 et avantageusement au moins une unité 16 de prospection, de production, ou/et de récupération de fluide, notamment d'hydrocarbures.

L'installation 10 comporte en outre un ensemble d'éclairage 18 et le système 12 de commande d'intensité lumineuse, propre à piloter l'ensemble d'éclairage 18.

L'installation 10 est située dans un environnement comportant des masses d'air 20 en circulation. L'environnement de l'installation 10 comporte en outre des volatiles 22, notamment des groupes 24 de volatiles 22 volant autour de l'installation 10. Les volatiles 22 sont par exemple des oiseaux migrateurs.

L'ensemble d'éclairage 18 comporte ici une pluralité de sources lumineuses 26. Les sources lumineuses 26 sont par exemple des sources électriques, tel que des lampes et/ou des projecteurs. En variante, les sources lumineuses 26 comprennent des sources thermiques, telles que des torches.

Dans l'exemple illustré sur la figure 2, l'ensemble d'éclairage 18 comporte une pluralité de lignes d'éclairage 28 comportant chacune au moins une source lumineuse 26, et un tableau 30 de distribution de puissance (« Power Distribution Board » ou « PDB ») raccordé à chaque ligne d'éclairage 28.

L'ensemble d'éclairage 18 comporte en outre une unité de secours 32, propre à garantir un éclairage de secours.

Dans cet exemple, chaque ligne d'éclairage 28 est raccordée au tableau de distribution 30 pour être pilotée sélectivement en intensité lumineuse par le tableau de distribution 30. Les lignes 28 sont ici représentées avec des sources lumineuses 26 en série, bien que des dérivations, et des sources 26 parallèles peuvent être également prévues sur chaque ligne 28.

Le tableau de distribution de puissance 30 est propre à ajuster sélectivement l'intensité lumineuse de chaque source lumineuse 26 entre une valeur maximale et une valeur minimale requise pour garantir la sécurité des opérateurs présents dans l'installation 10.

En fonctionnement normal, le tableau de distribution de puissance 30 est piloté par le système de commande 12.

En cas d'urgence, l'unité de secours 32 est propre à piloter directement le tableau de distribution 30. Elle comporte par exemple un système intégré de commande et de sécurité 34 (« Integrated Control and Safety System » ou « ICSS » en anglais).

En référence à la figure 2, le système de commande 12 comporte une unité 40 de collecte de données météorologiques dans une région 42 située autour de l'installation 10, une interface 44 d'interrogation d'une base de données 46 de présence de volatiles 22 dans la région 42 autour de l'installation 10, et une unité 48 de prédiction raccordée à l'unité de collecte 40 et à l'interface d'interrogation 44 pour calculer une probabilité de passage d'un flux de volatiles 22 en regard de l'installation 10 en fonction du temps.

Le système de commande 12 comporte en outre une unité de commande 50 des sources lumineuses 26 en fonction de la probabilité de passage calculée, raccordée à l'ensemble d'éclairage 18.

Dans l'exemple représenté sur la figure 2, l'unité de collecte 40 est formée par une station météo 52. La station météo 52 comporte des capteurs 54, au moins une horloge maître 56, et un système de suivi météorologique 58 raccordé aux capteurs 54 et à l'horloge 56.

Avantageusement, l'unité de collecte 40 comporte un système 60 de supervision à distance.

Les capteurs 54 sont par exemple des capteurs de mesure de la vitesse et de la direction du vent, des capteurs de mesure de température ou/et des capteurs de mesure de pression atmosphérique.

Les capteurs 54 sont situés localement sur l'installation 10 ou au voisinage de celle-ci dans la région 42.

L'horloge 56 est propre à permettre une datation des mesures prises par les capteurs 54. Elle est raccordée au système de suivi météorologique 58.

Le système de suivi météorologique 58 est propre à collecter les paramètres météorologiques mesurés localement par les capteurs 54 et les données temporelles reçues de l'horloge 56. Avantageusement, le système 58 comporte au moins un calculateur muni d'un processeur et d'une mémoire contenant des applications logicielles propres à être exécutées par le processeur. La mémoire contient au moins une application de collecte des données des capteurs 54 et de l'horloge 56. L'application de collecte est propre à récupérer les données analogiques et numériques des capteurs 54 et à les afficher ou/et les intégrer dans une base de données temporelles..

Le système de supervision à distance 60 est propre à afficher les informations de dysfonctionnement des systèmes de la station météo 52.

La base de données 46 de présence de volatiles contient des informations sur le type, la position, et/ou l'altitude de volatiles 22 se dirigeant vers la région 42 située autour de l'installation 10.

La base de données 46 est par exemple une base de données accessible par Internet, notamment. Movebank for Animal Tracking Data (https://www.movebank.org/) - les données de cette base sont accessibles sur demande et autorisation.

La base de données 46 est généralement déportée par rapport à l'installation 10. Elle est interrogeable à distance au moyen de l'interface 44.

L'interface 44 est par exemple un réseau de transmission de données, tel que le réseau Internet, fonctionnant notamment suivant le protocole TCP/IP.

L'unité de prédiction 48 est propre à interroger l'unité de collecte 40 et la base de données 46 de présence de volatiles à travers l'interface 44 pour calculer une probabilité de passage d'un flux de volatiles 22 en regard de l'installation 10 en fonction du temps, sur la base des données météorologiques fournies par l'unité de collecte 40, et des données de présence de volatiles 22 dans la région 42 autour de l'installation 10, obtenues dans la base de données 46.

Avantageusement, l'unité de prédiction 48 comporte un calculateur comprenant au moins un processeur 70 et une mémoire 72 contenant des applications logicielles propres à être exécutées par le processeur 70.

La mémoire 72 contient de préférence une application 74 de détermination de données météorologiques prédictives à partir des mesures collectées par la station météo 52, une application 76 de récupération de données de déplacement de volatiles 22, à partir de la base de données 46, à travers l'interface 44, et une application 78 de calcul d'une probabilité de passage de volatiles 22 en regard de l'installation 10 en fonction du temps.

L'application de détermination 74 est propre à établir une prédiction météorologique en fonction du temps dans la région 42 située autour de l'installation 10, sur la base d'un modèle météorologique et des paramètres météorologiques locaux mesurés par les capteurs 54 de la station météo 52.

Les données météorologiques prédictives sont par exemple la vitesse et la direction du vent, la pression atmosphérique, la température, les précipitations en une pluralité de points de la région 42, à des latitudes, des longitudes et des altitudes différentes.

Ainsi, l'application de détermination 74 est propre à déterminer, au cours du temps, la vitesse et la direction de flux de masses d'air 20 autour de l'installation 10, à des altitudes différentes, susceptibles d'accueillir des volatiles 22 en vol.

L'application de calcul 78 est ainsi propre à utiliser les données météorologiques prédictives, en particulier les vitesses de vent et les flux des masses d'air en différents points autour de l'installation 10, au cours du temps, pour prédire un mouvement des groupes 24 de volatiles 22 en fonction du temps, à partir des positions connues des groupes 24 de volatiles 22 extraites de la base de données 46, et d'un modèle mathématique de déplacement.

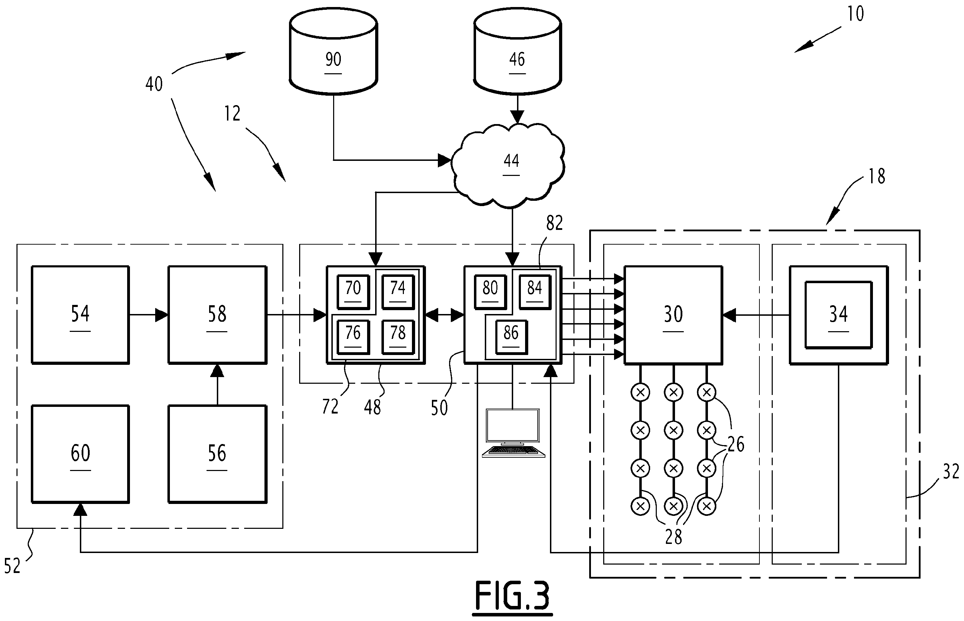

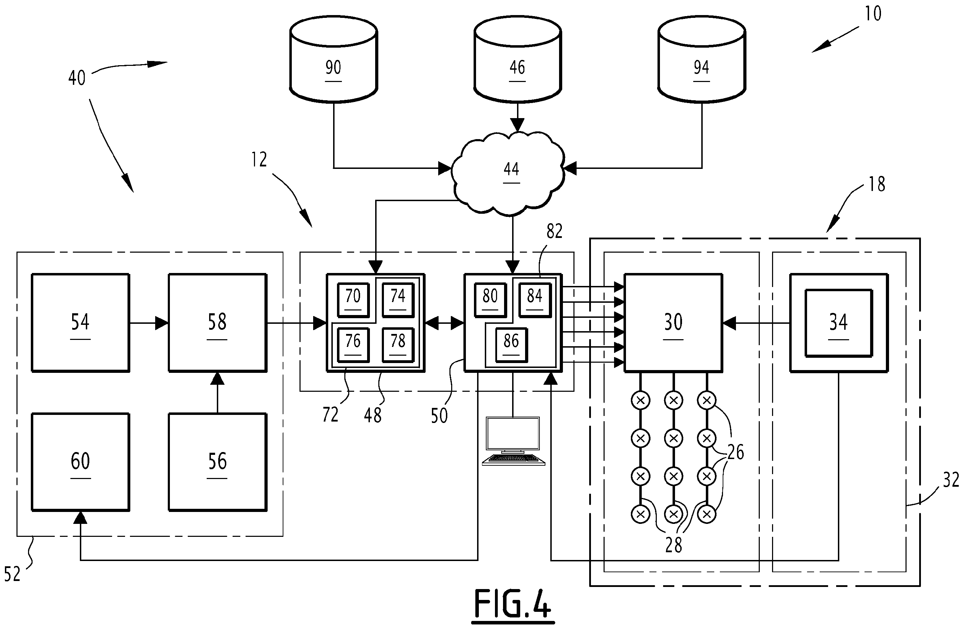

Ce calcul permet d'obtenir une probabilité de passage de volatiles 22 en regard de l'installation 10 en fonction du temps, dans un intervalle de temps par exemple compris entre une heure et quelques jours (de quelques heures à 3 jours pour la figure 2, de quelques heures à 10 jours pour la figure 3 et 4). Cette probabilité est par exemple calculée à une fréquence comprise entre une heure et une journée.

L'unité de commande 50 est par exemple un automate programmable industriel (« Progammable Logic Controller » ou « PLC »).

L'unité de commande 50 est raccordée à l'unité de prédiction 48 et à l'ensemble d'éclairage 18. Elle est propre à commander l'ensemble d'éclairage 18 pour ajuster l'intensité des sources lumineuses 26 en fonction de la probabilité de passage calculée par l'unité de prédiction 48.

L'unité de commande 50 comporte par exemple un calculateur muni d'au moins un processeur 80 et une mémoire 82 contenant des applications propres à être exécutées par le processeur.

La mémoire 82 contient en particulier une application 84 de récupération des probabilités de passage calculées en fonction du temps par l'unité de prédiction 48, et une application 86 de génération d'une commande de l'ensemble d'éclairage 18, en particulier du tableau de distribution 30, en fonction des probabilités de passage calculées.

En particulier, l'application de génération 86 est propre à engendrer une commande du tableau de distribution 30 pour réduire l'intensité lumineuse des sources lumineuses 26 d'au moins une ligne 28 lorsque la probabilité de passage calculée augmente au cours du temps, par exemple passe au-dessus d'un seuil prédéterminé, ou d'un gradient prédéterminé.

La réduction de l'intensité lumineuse est par exemple effectuée de manière progressive au cours du temps, la réduction étant maximale lorsque la probabilité de passage est maximale.

En opération, quel que soit la probabilité de passage calculée, l'unité de commande 50 est propre à maintenir une intensité lumineuse minimale de la ou de chaque source lumineuse 26 de l'installation 10 pour garantir la sécurité des opérateurs de l'installation 10 lorsque l'installation 10 est active.

En cas d'urgence, l'unité de secours 32 est propre à piloter directement l'unité de commande 50, pour garantir un éclairage de secours, indépendamment de la probabilité de passage calculée par l'unité de prédiction 48.

L'éclairage de secours consiste par exemple à illuminer au moins une source lumineuse 26 à une intensité de secours supérieure à l'intensité lumineuse minimale définie plus haut, même si la probabilité de passage calculée par l'unité de prédiction 48 impose de maintenir l'intensité lumineuse minimale.

Le procédé de commande de l'intensité lumineuse de l'installation 10 selon l'invention, mis en œuvre à l'aide du système de commande 12, va maintenant être décrit.

En temps réel, les capteurs 54 de la station météo 52 relèvent des paramètres météorologiques locaux au voisinage de l'installation 10 et l'horloge 56 relève des données temporelles qui alimentent les applications de collecte de données du système de suivi météorologique 58.

En parallèle, la base de données 46 est alimentée par des données de positionnement de volatiles 22 dans la région 42.

L'application 74 de détermination de données météorologiques prédictives, et l'application 76 de récupération de données de positionnement de volatiles 22 sont alors activées par l'unité de prédiction 48.

Sur la base des paramètres météorologiques locaux mesurés, l'application de détermination 74 établit alors des données météorologiques prédictives, telles que la vitesse et la direction du vent, la pression atmosphérique, la température, les précipitations en une pluralité de points de la région 42 au cours du temps, dans un intervalle de temps tel que défini plus haut.

Les applications 74, 76 alimentent l'application de calcul 78 de l'unité de prédiction 48 qui calcule une probabilité de passage de passage de volatiles 22 en regard de l'installation 10 en fonction du temps dans l'intervalle de temps précité, et à la fréquence choisie telle que définis plus haut.

La probabilité de passage en fonction du temps calculée par l'unité de prédiction 48 est récupérée par l'application de récupération 84 de l'unité de commande 50. En fonction de cette probabilité de passage, l'application de génération 86 engendre une commande du tableau de distribution 30.

En particulier, lorsque la probabilité de passage augmente au cours du temps, par exemple lorsque la probabilité de passage ou le gradient de probabilité de passage passe au-dessus d'un seuil déterminé, la commande prévoit une diminution de l'intensité lumineuse de chaque source 26. Cette diminution est par exemple progressive au cours du temps. Elle est limitée pour maintenir une intensité lumineuse minimale dans l'installation 10 requise pour la sécurité de chaque opérateur de l'installation 10.

Ainsi, l'intensité lumineuse de l'installation 10 est adaptée au cours du temps en fonction de la présence de volatiles 22 au voisinage de l'installation 10. En particulier, l'intensité lumineuse est grandement atténuée lorsque cette probabilité augmente significativement, ce qui réduit le risque de perturbations sur la faune volant autour de l'installation 10.

Cette atténuation de l'impact de l'installation 10 sur les volatiles 22 est fonction du type de volatile 22. Elle est en outre très efficace.

Dans la variante illustrée par la figure 3, l'unité de prédiction 48 comporte également une interface d'interrogation d'une base de données 90 contenant des données météorologiques prédictives en ligne.

Cette interface est par exemple l'interface 44. La base de données 90 est par exemple un système de prévision météorologique à court terme tel que le système PEARP de Météo France ou les systèmes EPS et/ou CEP.

Le procédé comporte alors une interrogation de la base de données 90 par l'interface 44 pour obtenir des données météorologiques prédictives additionnelles en complément des données météorologiques prédictives obtenues par l'application 74 via la station météo 52.

Le procédé comporte également une comparaison des données météorologiques prédictives obtenues à partir de la station météorologique locale 52 et des données météorologiques prédictives additionnelles obtenues à partir de la base de données 90 pour déterminer quelles données sont les plus précises. Le choix du modèle prédictif est par exemple déterminé :
1/ par la période de l'année (météorologie impliquant des phénomènes stratosphériques ou pas) ;
2/ par la distance des volatiles 22 par rapport à l'installation 10 ; et/ou
3/ par la période de prédiction étudiée.

Les données météorologiques prédictives les plus précises sont alors utilisées par l'unité de prédiction 48, pour calculer la probabilité de passage en fonction du temps, tel que décrit précédemment.

Dans la variante illustrée par la figure 4, l'unité de commande 50 est propre à interroger une base de données 94 de maintenance sur l'installation 10, par exemple à travers l'interface 44, pour obtenir des dates et/ou des heures potentielles de maintenance prévues sur l'installation 10.

Si au moins une date et/ou une heure potentielle de maintenance intervient lorsqu'une probabilité de passage calculée dépasse un seuil donné, ou un gradient donné, l'application de génération 86 est propre à signaler un conflit avec la date et/ou l'heure potentielle de maintenance, voire à modifier la date et/ou l'heure potentielle de maintenance dans la base de données 94.

Il est ainsi possible de synchroniser de manière efficace les opérations de maintenance sur l'installation 10 en minimisant leur impact sur l'environnement extérieur.

Dans la variante où l'installation 10 est située à terre, l'installation 10 est par exemple une usine fonctionnant en continu ou une installation urbaine de grande dimension. Elle comprend une structure 14, un ensemble d'éclairage 18 de l'installation 10, et un système 12 de commande de l'intensité lumineuse engendrée par l'installation 10, tel que décrit plus haut.

## Revendications

1. Procédé de commande de l'intensité lumineuse d'une installation (10), comportant l'étape suivante :
- commande par une unité de commande (50) d'au moins une source lumineuse (26) de l'installation (10), le procédé étant
**caractérisé par** les étapes suivantes :
- détermination de données météorologiques prédictives dans une région (42) située autour de l'installation (10) ;
- interrogation d'une base de données (46) de présence de volatiles (22) dans la région (42) située autour de l'installation (10) ;
- calcul par une unité de prédiction (48) d'une probabilité de passage de volatiles (22) en regard de l'installation (10) en fonction du temps, sur la base des données météorologiques prédictives, et des données de présence de volatiles (22) dans la région (42) située autour de l'installation (10) ;
la commande par une unité de commande (50) d'au moins une source lumineuse (26) de l'installation (10), étant sur la base de la probabilité de passage calculée par l'unité de prédiction (48).

2. Procédé selon la revendication 1, dans lequel la commande d'au moins une source lumineuse (26) de l'installation (10) comporte la réduction de l'intensité lumineuse de la ou de chaque source lumineuse (26) de l'installation (10) lorsque la probabilité de passage calculée par l'unité de prédiction (48) augmente.

3. Procédé selon la revendication 2, dans lequel la commande d'au moins une source lumineuse (26) de l'installation (10) comporte le maintien d'une intensité lumineuse minimale de la ou de chaque source lumineuse (26) de l'installation (10) quelle que soit la probabilité de passage calculée par l'unité de prédiction (48).

4. Procédé selon l'une quelconque des revendications 2 ou 3, dans lequel la commande d'au moins une source lumineuse (26) de l'installation (10) comporte en cas d'urgence, l'activation d'au moins une source lumineuse (26) de l'installation (10) à une intensité de secours par une unité de secours (32), indépendamment de la probabilité de passage calculée par l'unité de prédiction (48).

5. Procédé selon l'une quelconque des revendications précédentes, dans lequel la détermination de données météorologiques prédictives comporte la mesure de paramètres météorologiques locaux au niveau de l'installation (10) par une station météorologique (52), et l'établissement des données météorologiques prédictives dans la région (42) par une application (74) de détermination, à partir des paramètres météorologiques locaux mesurés au niveau de l'installation (10).

6. Procédé selon l'une quelconque des revendications précédentes, dans lequel la détermination de données météorologiques prédictives comporte l'interrogation d'une base de données (90) contenant des données météorologiques prédictives en ligne.

7. Procédé selon les revendications 5 et 6 prises ensemble, dans lequel la détermination de données météorologiques prédictives comporte une comparaison entre les données météorologiques prédictives obtenues à partir des paramètres météorologiques locaux mesurés, et les données météorologiques prédictives obtenues à partir de la base de données (90) contenant des données météorologiques prédictives en ligne.

8. Procédé selon l'une quelconque des revendications précédentes, comportant l'interrogation d'une base de données (46) de maintenance de l'installation (10) pour déterminer au moins une date et/ou une heure potentielle de maintenance prévue sur l'installation (10), et la récupération de la probabilité de passage calculée par l'unité de prédiction (48) à la date et/ou à l'heure potentielle de maintenance.

9. Système (12) de commande de l'intensité lumineuse d'une installation (10), comportant
- une unité de commande (50) d'au moins une source lumineuse (26) de l'installation (10), le système étant **caractérisé par** :
- une base de données (46) de présence de volatiles (22) dans la région (42) située autour de l'installation (10) ;
- une unité de prédiction (48) propre à déterminer des données météorologiques prédictives dans une région (42) située autour de l'installation (10), l'unité de prédiction (48) étant propre à interroger la base de données (46) de présence de volatiles (22) pour calculer une probabilité de passage de volatiles (22) en regard de l'installation (10) en fonction du temps, sur la base des données météorologiques prédictives, et des données de présence de volatiles (22) dans la région (42) située autour de l'installation (10) ;
la commande par l'unité de commande (50) d'au moins une source lumineuse (26) de l'installation (10), étant sur la base de la probabilité de passage calculée par l'unité de prédiction (48).

10. Système (12) selon la revendication 9, dans lequel l'unité de commande (50) d'au moins une source lumineuse (26) de l'installation (10) est propre à réduire l'intensité lumineuse de la ou de chaque source lumineuse (26) de l'installation (10) lorsque la probabilité de passage calculée par l'unité de prédiction (48) augmente.

11. Système (12) selon la revendication 10, dans lequel l'unité de commande (50) d'au moins une source lumineuse (26) de l'installation (10) est propre à maintenir une intensité lumineuse minimale de la ou de chaque source lumineuse (26) de l'installation (10) quelle que soit la probabilité de passage calculée par l'unité de prédiction (48).

12. Système (12) selon l'une quelconque des revendications 10 ou 11, comportant une unité de sécurité (34), propre à activer au moins une source lumineuse (26) de l'installation (10) indépendamment de la probabilité de passage calculée par l'unité de prédiction (48).

13. Système (12) selon l'une quelconque des revendications 9 à 12, comprenant une unité de collecte (40) de données météorologiques comportant une station météo (52) propre à mesurer des paramètres météorologiques locaux au niveau de l'installation (10), et un système de suivi météorologique (58) et l'unité de prédiction (48) étant propre à déterminer des données météorologiques prédictives dans la région (42) située autour de l'installation (10) à partir des paramètres météorologiques locaux mesurés.

14. Système (12) selon l'une quelconque des revendications 9 à 13, dans lequel l'unité de prédiction (48) est propre à interroger une base de données (90) contenant des données météorologiques prédictives en ligne.

15. Système (12) selon l'une quelconque des revendications 9 à 14, dans lequel l'unité de commande (50) est propre à interroger une base de données (94) de maintenance de l'installation (10) pour déterminer au moins une date et/ou une heure potentielle de maintenance prévue sur l'installation (10), l'unité de commande (50) étant propre à récupérer la probabilité de passage calculée par l'unité de prédiction (48) à la date et/ou à l'heure potentielle de maintenance.

## Patentansprüche

1. Verfahren zum Steuern der Lichtintensität einer Anlage (10), umfassend den folgenden Schritt:
- Steuern, durch eine Steuereinheit (50), von mindestens einer Lichtquelle (26) der Anlage (10), wobei das Verfahren durch die folgenden Schritte gekennzeichnet ist:
- Bestimmen von prädiktiven meteorologischen Daten in einem Gebiet (42), das sich um die Anlage (10) befindet;
- Abfragen einer Datenbank (46) über das Vorhandensein von Vögeln (22) in dem Gebiet (42) um die Anlage (10);
- Berechnen, durch eine Prädiktionseinheit (48), einer Wahrscheinlichkeit eines Vorbeifliegens von Vögeln (22) in Bezug auf die Anlage (10) abhängig von der Zeit basierend auf den prädiktiven meteorologischen Daten und von Daten über das Vorhandensein von Vögeln (22) in dem Gebiet (42) um die Anlage (10);
das Steuern, durch eine Steuereinheit (50), von mindestens einer Lichtquelle (26) der Anlage (10), was sich auf die Vorbeifliegenwahrscheinlichkeit stützt, die von der Prädiktionseinheit (48) berechnet wird.

2. Verfahren nach Anspruch 1, wobei das Steuern mindestens einer Lichtquelle (26) der Anlage (10) das Verringern der Lichtintensität der oder jeder Lichtquelle (26) der Anlage (10) umfasst, wenn die Vorbeifliegenwahrscheinlichkeit, die von der Prädiktionseinheit (48) berechnet wird, steigt.

3. Verfahren nach Anspruch 2, wobei das Steuern mindestens einer Lichtquelle (26) der Anlage (10) das Beibehalten einer Lichtintensität der oder jeder Lichtquelle (26) der Anlage (10) unabhängig von der Vorbeifliegenwahrscheinlichkeit, die von der Prädiktionseinheit (48) berechnet wird, umfasst.

4. Verfahren nach einem der Ansprüche 2 oder 3, wobei das Steuern mindestens einer Lichtquelle (26) der Anlage (10) im Notfall die Aktivierung mindestens einer Lichtquelle (26) der Anlage (10) mit einer Notfallintensität durch eine Notfalleinheit (32) unabhängig von der von der Prädiktionseinheit (48) berechneten Vorbeifliegenwahrscheinlichkeit umfasst.

5. Verfahren nach einem der vorherigen Ansprüche, wobei das Bestimmen von prädiktiven meteorologischen Daten das Messen von lokalen meteorologischen Parametern auf Ebene der Anlage (10) durch eine Wetterstation (52) und das Erstellen der prädiktiven meteorologischen Daten in dem Gebiet (42) durch eine Bestimmungsanwendung (74) anhand der lokalen meteorologischen Parameter, die an der Anlage (10) gemessen werden, umfasst.

6. Verfahren nach einem der vorherigen Ansprüche, wobei das Bestimmen von prädiktiven meteorologischen Daten das Abfragen einer Datenbank (90) umfasst, die prädiktive meteorologische Online-Daten enthält.

7. Verfahren nach Anspruch 5 und 6 zusammengenommen, wobei das Bestimmen der prädiktiven meteorologischen Daten ein Vergleich zwischen den prädiktiven meteorologischen Daten, die anhand der gemessenen lokalen meteorologischen Daten erlangt werden, und den prädiktiven meteorologischen Daten, die aus der Datenbank (90) erlangt werden, die prädiktive meteorologische Online-Daten enthält, umfasst.

8. Verfahren nach einem der vorherigen Ansprüche, umfassend das Abfragen einer Wartungsdatenbank (46) der Anlage (10), um mindestens ein potenzielles Datum und/oder eine potenzielle Uhrzeit einer geplanten Wartung an der Anlage (10) zu bestimmen, und das Abrufen der von der Prädiktionseinheit (48) berechneten Vorbeifliegenwahrscheinlichkeit zu dem potenziellen Wartungsdatum und/oder der potenziellen Uhrzeit.

9. System (12) zum Steuern der Lichtintensität einer Anlage (10), umfassend
- eine Steuereinheit (50) mindestens einer Lichtquelle (26) der Anlage (10), wobei das System durch Folgendes gekennzeichnet:
- eine Datenbank (46) über das Vorhandensein von Vögeln (22) in dem Gebiet (42) um die Anlage (10);
- eine Prädiktionseinheit (48), die angepasst ist, um prädiktive meteorologische Daten in einem Gebiet (42) um die Anlage (10) zu bestimmen, wobei die Prädiktionseinheit (48) angepasst ist, um die Datenbank (46) des Vorhandenseins von Vögeln (22) abzufragen, um eine Vorbeifliegenwahrscheinlichkeit von Vögeln (22) in Bezug auf die Anlage (10) abhängig von der Zeit, basierend auf den prädiktiven meteorologischen Daten und den Daten des Vorhandenseins von Vögeln (22) in dem Gebiet (42) um die Anlage (10) zu berechnen;
das Steuern, durch die Steuereinheit (50), von mindestens einer Lichtquelle (26) der Anlage (10), was sich auf die Vorbeifliegenwahrscheinlichkeit stützt, die von der Prädiktionseinheit (48) berechnet wird.

10. System (12) nach Anspruch 9, wobei die Steuereinheit (50) von mindestens einer Lichtquelle (26) der Anlage (10) geeignet ist, um die Lichtintensität der oder jeder Lichtquelle (26) der Anlage (10) zu verringern, wenn die Vorbeifliegenwahrscheinlichkeit, die von der Prädiktionseinheit (48) berechnet wird, steigt.

11. System (12) nach Anspruch 10, wobei die Steuereinheit (50) von mindestens einer Lichtquelle (26) der Anlage (10) geeignet ist, um eine minimale Lichtintensität der oder jeder Lichtquelle (26) der Anlage (10) unabhängig von der Vorbeifliegenwahrscheinlichkeit, die von der Prädiktionseinheit (48) berechnet wird, beizubehalten.

12. System (12) nach einem der Ansprüche 10 oder 11, umfassend eine Sicherheitseinheit (34), die geeignet ist, um mindestens eine Lichtquelle (26) der Anlage (10) unabhängig von der Vorbeifliegenwahrscheinlichkeit, die von der Prädiktionseinheit (48) berechnet wird, zu aktivieren.

13. System (12) nach einem der Ansprüche 9 bis 12, umfassend eine Sammeleinheit (40) meteorologischer Daten, umfassend eine Wetterstation (52), die geeignet ist, um lokale meteorologische Daten auf Ebene der Anlage (10) zu messen, und wobei ein meteorologisches Verfolgungssystem (58) und die Prädiktionseinheit (48) geeignet sind, um anhand der gemessenen lokalen meteorologischen Parametern prädiktive meteorologische Daten in dem Gebiet (42) um die Anlage (10) zu bestimmen.

14. System (12) nach einem der Ansprüche 9 bis 13, wobei die Prädiktionseinheit (48) geeignet ist, um eine Datenbank (90) abzufragen, die prädiktive meteorologische Online-Daten enthält.

15. System (12) nach einem der Ansprüche 9 bis 14, wobei die Steuereinheit (50) geeignet ist, um eine Wartungsdatenbank (94) der Anlage (10) abzufragen, um mindestens ein potenzielles Datum und/oder eine potenzielle Uhrzeit einer geplanten Wartung an der Anlage (10) zu bestimmen, wobei die Steuereinheit (50) geeignet ist, um die von der Prädiktionseinheit (48) berechnete Vorbeifliegenwahrscheinlichkeit zu dem potenziellen Wartungsdatum und/oder der potenziellen Uhrzeit abzurufen.

## Claims

1. A method for controlling the light intensity of a facility (10), including the following step:
- controlling, via a control unit (50), at least one light source (26) of the facility (10); the process being **characterized by** the following steps:
- determining predictive meteorological data in an region (42) surrounding the facility (10);
- querying a database (46) of presence of birds (22) in the region (42) surrounding the facility (10);
- calculating, via a prediction unit (48), a probability of passage of birds (22) passing opposite the facility (10) as a function of time, on the basis of the predictive meteorological data and of data of presence of birds (22) in the region (42) surrounding the facility (10);
the controlling, via a control unit (50), at least one light source (26) of the facility (10) being on the basis of the probability of passage, calculated by the prediction unit (48).

2. The method according to claim 1, wherein the control of at least one light source (26) of the facility (10) includes reducing the light intensity of the or of each light source (26) of the facility (10) when the probability of passage calculated by the prediction unit (48) increases.

3. The method according to claim 2, wherein the control of at least one light source (26) of the facility (10) includes maintaining a minimal light intensity of the or of each light source (26) of the facility (10) irrespective of the probability of passage calculated by the prediction unit (48).

4. The method according to any one of claims 2 or 3, wherein the control of at least one light source (26) of the facility (10) includes, in case of emergency, activating at least one light source (26) of the facility (10) at a backup intensity by a backup unit (32), independently of the probability of passage calculated by the prediction unit (48).

5. The method according to any one of the preceding claims, wherein the determination of predictive meteorological data includes measuring local meteorological parameters at the facility (10) via a weather station (52), and establishing predictive meteorological data in the region (42) via a determining application (74), from local meteorological parameters measured at the facility (10).

6. The method according to any one of the preceding claims, wherein the determination of predictive meteorological data includes querying a database (90) containing online predictive meteorological data.

7. The method according to claims 5 and 6 taken together, wherein the determination of predictive meteorological data includes a comparison between the predictive meteorological data obtained from measured local meteorological parameters, and the predictive meteorological data obtained from the database (90) containing online predictive meteorological data.

8. The method according to any one of the preceding claims, including querying a maintenance database (46) of the facility (10) in order to determine at least one potential maintenance date and/or time scheduled on the facility (10), and recovering the probability of passage calculated by the prediction unit (48) on the potential maintenance date and/or time.

9. A system (12) for controlling the light intensity of a facility (10), including:
- a control unit (50) of at least one light source (26) of the facility (10); the system being **characterized by**
- a database (46) of presence of birds (22) in the region (42) surrounding the facility (10);
- a prediction unit (48) able to determine predictive meteorological data in a region (42) surrounding the facility (10), the prediction unit (48) being able to query the bird (22) presence database (46) in order to calculate a probability of passage of birds (22) passing opposite the facility (10) as a function of time, based on predictive meteorological data, and of data of presence of birds in the region (42) surrounding the facility (10);
the control by the control unit (50) of at least one light source (26) of the facility (10), being on the basis of the probability of passage, calculated by the prediction unit (48).

10. The system (12) according to claim 9, wherein the control unit (50) of at least one light source (26) of the facility (10) is able to reduce the light intensity of the or of each light source (26) of the facility (10) when the probability of passage calculated by the prediction unit (48) increases.

11. The system (12) according to claim 10, wherein the control unit (50) of at least one light source (26) of the facility (10) is able to maintain a light intensity of the or of each light source (26) of the facility (10) irrespective of the probability of passage calculated by the prediction unit (48).

12. The system (12) according to any one of claims 10 or 11, including a security unit (34), able to activate at least one light source (26) of the facility (10) independently of the probability of passage calculated by the prediction unit (48).

13. The system (12) according to any one of claims 9 to 12, comprising a meteorological data collection unit (40) including a weather station (52) able to measure local meteorological parameters at the facility (10), and a meteorological tracking system (58), the prediction unit (48) being able to determine predictive meteorological data in the region (42) located around the facility (10) from measured local meteorological parameters.

14. The system (12) according to any one of claims 9 to 13, wherein the prediction unit (48) is able to query a database (90) containing online predictive meteorological data.

15. The system (12) according to any one of claims 9 to 14, wherein the control unit (50) is able to query a maintenance database (94) of the facility (10) in order to determine at least one potential maintenance date and/or time scheduled on the facility (10), the control unit (50) being able to recover the probability of passage calculated by the prediction unit (48) on the potential maintenance date and/or time.
